# EUROPEAN PATENT APPLICATION

(11) **EP 4 765 277 A1**
(43) Date of publication of application: **24.06.2026**
(21) Application number: 25864497.0
(22) Date of filing: 16.09.2025
(51) Int. Cl.: H01M 10/04, B65G 21/20, B65G 57/03, B65G 1/02, B65G 59/02, B65G 47/52, G01N 21/88

(54) **UNIT CELL STACKING DEVICE AND UNIT CELL STACKING METHOD USING SAME**

(30) Priority: 10.10.2024 KR 20240137617
(71) Applicant: LG ENERGY SOLUTION, LTD., Seoul 07335 (KR)
(72) Inventor: KIM, Jae In, Daejeon 34122 (KR)
(74) Representative: Goddar, Heinz J.
(86) International application number: PCT/KR2025/014396
(87) International publication number: WO 2026/079704

(57) **Abstract**

Disclosed are a unit cell stacking apparatus including a conveyor belt configured to allow a unit cell to be seated thereon and to transfer the unit cell to one side or the other side, a transfer unit configured to transfer the unit cell while suctioning an upper surface of the unit cell, an image capturing unit configured to capture an image of the unit cell, a controller configured to determine whether the unit cell is defective based on information received from the image capturing unit, a stacking unit configured to allow a normal unit cell determined to be normal by the controller to be stacked thereon, and an ejection unit configured to eject a defective unit cell determined to be defective by the controller, and a unit cell stacking method using the same.

## Description

### [Technical Field]

This application claims the benefit of priority to Korean Patent Application No. 10-2024-0137617 filed on October 10, 2024, the disclosure of which is incorporated herein by reference in its entirety.

The present invention relates to a unit cell stacking apparatus and a unit cell stacking method using the same, and more particularly to a unit cell stacking apparatus capable of minimizing equipment downtime even when defective unit cells are detected, thereby increasing the equipment operating rate, and a unit cell stacking method using the same.

### [Background Art]

With technological development of mobile devices and an increase in demand therefor, secondary batteries, which are capable of being charged and ejected, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

An electrode assembly may be manufactured to have a stack cell configuration in which a positive electrode and a negative electrode are stacked with a separator interposed therebetween to manufacture a mono-cell, a plurality of mono-cells is stacked, and a single half-cell is stacked on the uppermost side.

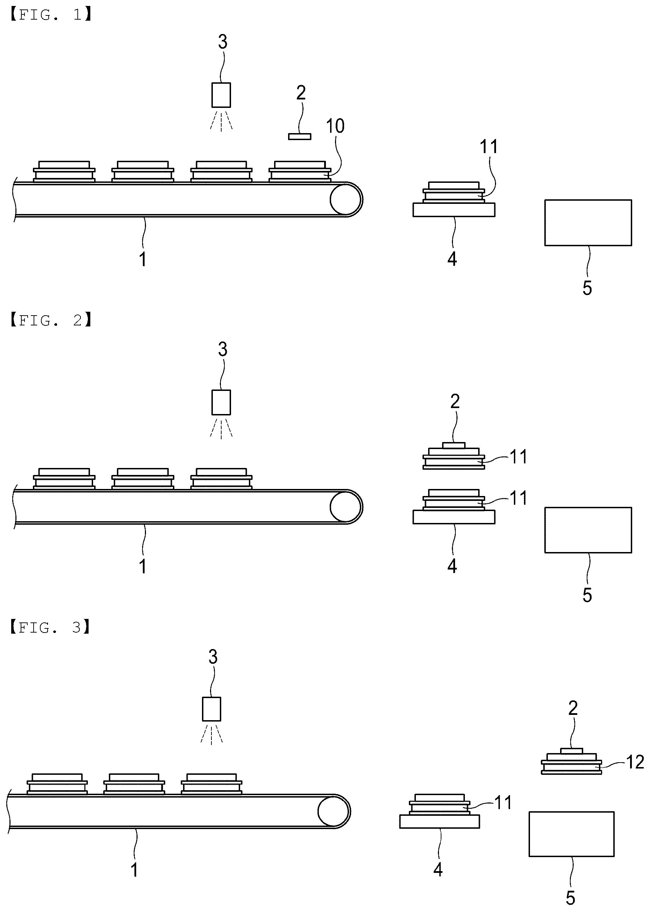

FIG. 1 is a conceptual view illustrating a conventional unit cell stacking apparatus, FIG. 2 is a view illustrating that the conventional unit cell stacking apparatus stacks a normal unit cell, and FIG. 3 is a view illustrating that the conventional unit cell stacking apparatus ejects a defective unit cell.

Referring to FIGs. 1 to 3, the conventional unit cell stacking apparatus may include a conveyor belt 1 configured to transfer a unit cell 10, an suction unit 2 configured to transfer the unit cell 10 while suctioning the unit cell, an image capturing unit 3 configured to capture an image of an upper part of unit cell 10, a stacking stage 4 configured to allow a normal unit cell 11 to be stacked thereon, and a storage box 5 configured to allow a defective unit cell 12 to be ejected thereto.

In the conventional stacking apparatus, if the unit cell 10 image-captured by the image capturing unit 3 is determined to be defective, the suction unit 2 must move to the position of the storage box 5 while suctioning the defective unit cell 10 before ejecting the defective unit cell. Consequently, equipment operation must be temporarily halted while the suction unit 2 moves to the position of the storage box 5, which leads to a reduction in overall equipment operating rate.

### (Prior Art Document)

(Patent Document 1) Korean Patent Application Publication No. 10-2020-0114408

### [Disclosure]

### [Technical Problem]

The present invention has been made in view of the above problems, and it is an object of the present invention to provide a unit cell stacking apparatus capable of stacking transferred unit cells without interrupting equipment operation, regardless of whether the unit cells are defective, and a unit cell stacking method using the same.

### [Technical Solution]

As a technical means for achieving the above object, a unit cell stacking apparatus according to an embodiment of the present invention includes a conveyor belt (100) configured to allow a unit cell (10) to be seated thereon and to transfer the unit cell (10) to one side or the other side, a transfer unit (200) configured to transfer the unit cell (10) while suctioning an upper surface of the unit cell, an image capturing unit (300) configured to capture an image of the unit cell (10), a controller (400) configured to determine whether the unit cell (10) is defective based on information received from the image capturing unit (300), a stacking unit (500) configured to allow a normal unit cell (11) determined to be normal by the controller (400) to be stacked thereon, and an ejection unit (600) configured to eject a defective unit cell (12) determined to be defective by the controller (400).

Also, in the unit cell stacking apparatus according to the embodiment of the present invention, the transfer unit (200) may include a suction unit (210) configured to suction the upper surface of the unit cell (10), a support shaft (220) connected to one side of the suction unit (210), the support shaft being configured to support the suction unit (210), and a rotary driving member (230) connected to one side of the support shaft (220), the rotary driving member being configured to rotate the support shaft (220) in an axial direction.

Also, in the unit cell stacking apparatus according to the embodiment of the present invention, when the defective unit cell (12) is suctioned by the suction unit (210), the transfer unit (200) may be rotated 180° about the support shaft (220) by the rotary driving member (230).

Also, the unit cell stacking apparatus according to the embodiment of the present invention may further include a storage unit (700) configured to store the ejected defective unit cell (12), wherein the ejection unit (600) may include a gripper unit (610) configured to grip the defective unit cell (12) suctioned by the suction unit (210) and a driving member (620) configured to transfer the gripper unit (610) toward the storage unit (700).

Also, in the unit cell stacking apparatus according to the embodiment of the present invention, when the normal unit cell (11) is suctioned by the suction unit (210), the transfer unit (200) may seat the normal unit cell (11) on the stacking unit (500).

Also, in the unit cell stacking apparatus according to the embodiment of the present invention, the image capturing unit (300) may include a first image capturing unit (310) configured to capture an image of an upper part of the unit cell (10) seated on the conveyor belt (100) and a second image capturing unit (320) configured to capture an image of a lower part of the unit cell (10) transferred by the transfer unit (200).

Also, in the unit cell stacking apparatus according to the embodiment of the present invention, the defective unit cell (12) may be a unit cell (10) having a defective upper surface and/or a defective lower surface based on information received from the first image capturing unit (310) and/or the second image capturing unit (320) or a seated position deviating from a predetermined position.

Also, the unit cell stacking apparatus according to the embodiment of the present invention may further include a storage unit (700) configured to store the ejected defective unit cell (12), wherein the storage unit (700) may include a first storage unit (710) configured to store a first defective unit cell (12a) having a defective upper surface and/or a defective lower surface and a second storage unit (720) configured to store a second defective unit cell (12b) having a seated position deviating from the predetermined position.

Also, in the unit cell stacking apparatus according to the embodiment of the present invention, the stacking unit (500) may include a stacking stage (510) configured to allow the normal unit cell (11) to be stacked thereon and a holding unit (520) provided on one side of the stacking stage (510), the holding unit being configured to press an upper part of the normal unit cell (11) stacked on the stacking stage (510).

Also, in the unit cell stacking apparatus according to the embodiment of the present invention, the unit cell (10) may be at least one of a mono-cell, an A-type bi-cell, a C-type bi-cell, and a half-cell.

In addition, a unit cell stacking method using the unit cell stacking apparatus according to the embodiment of the present invention includes (S1) suctioning an upper surface of a unit cell (10) seated on the conveyor belt (100) through the transfer unit (200), (S2) transferring the transfer unit (200) with the unit cell (10) suctioned thereby, and (S3) seating the unit cell (10) on the stacking unit (500) or delivering the unit cell (10) to the ejection unit (600).

Also, the unit cell stacking method according to the embodiment of the present invention may further include capturing an image of an upper part of the unit cell (10) in step (S1), capturing an image of a lower part of the unit cell (10) in step (S2), and receiving information about the unit cell (10) image-captured in step (S1) and step (S2) and determining whether the unit cell (10) is defective through the controller (400) prior to step (S3).

Also, in the unit cell stacking method according to the embodiment of the present invention, if the controller (400) determines that the unit cell (10) is a normal unit cell (11) prior to step (S3), the transfer unit (200) may seat the normal unit cell (11) on the stacking unit (500) in step (S3).

Also, in the unit cell stacking method according to the embodiment of the present invention, if the controller (400) determines that the unit cell (10) is a defective unit cell (12) prior to step (S3), the transfer unit (200) may deliver the defective unit cell (12) to the ejection unit (600) in step (S3).

### [Advantageous Effects]

As is apparent from the above description, in a unit cell stacking apparatus according to the present invention and a unit cell stacking method using the same, a transfer unit transfers a unit cell toward a stacking unit, if the unit cell is a normal unit cell, the unit cell is seated on the stacking unit, and if the unit cell is a defective unit cell, the unit cell is delivered to an ejection unit through 180° rotation. Consequently, it is possible to reduce the transfer distance of the transfer unit, enabling a stacking process to proceed without interrupting equipment operation, thereby increasing the equipment operating rate.

Also, in the unit cell stacking apparatus according to the present invention and the unit cell stacking method using the same, defective unit cells having inaccurate seated positions on a conveyor belt can be separated from defective unit cells. Consequently, it is possible to reuse unit cells with simple position defects, thereby increasing the number of good products and improving yield.

### [Description of Drawings]

FIG. 1 is a conceptual view illustrating a conventional unit cell stacking apparatus.
FIG. 2 is a view illustrating that the conventional unit cell stacking apparatus stacks a normal unit cell.
FIG. 3 is a view illustrating that the conventional unit cell stacking apparatus ejects a defective unit cell.
FIG. 4 is a conceptual view illustrating a unit cell stacking apparatus according to an embodiment of the present invention.
FIG. 5 is a view illustrating that a transfer unit of the unit cell stacking apparatus according to the embodiment of the present invention suctions a unit cell.
FIG. 6 is a view illustrating the transfer unit of the unit cell stacking apparatus according to the embodiment of the present invention.
FIG. 7 is a view illustrating that the transfer unit of the unit cell stacking apparatus according to the embodiment of the present invention moves over a stacking unit while suctioning a normal unit cell.
FIG. 8 is a view illustrating that the transfer unit of the unit cell stacking apparatus according to the embodiment of the present invention stacks the normal unit cell on the stacking unit.
FIG. 9 is a view illustrating the stacking unit of the unit cell stacking apparatus according to the embodiment of the present invention.
FIG. 10 is a view illustrating that the transfer unit of the unit cell stacking apparatus according to the embodiment of the present invention moves over the stacking unit while suctioning a defective unit cell.
FIG. 11 is a view illustrating that the transfer unit of the unit cell stacking apparatus according to the embodiment of the present invention is rotated while suctioning the defective unit cell.
FIG. 12 is a view illustrating that an ejection unit of the unit cell stacking apparatus according to the embodiment of the present invention grips the defective unit cell.
FIG. 13 is a view illustrating the ejection unit of the unit cell stacking apparatus according to the embodiment of the present invention.
FIG. 14 is a view illustrating that the ejection unit of the unit cell stacking apparatus according to the embodiment of the present invention ejects a first defective unit cell.
FIG. 15 is a view illustrating that the ejection unit of the unit cell stacking apparatus according to the embodiment of the present invention ejects a second defective unit cell.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a unit cell stacking apparatus according to the present invention and a unit cell stacking method using the same will be described.

A unit cell refers to a mono-cell, an A-type bi-cell, a C-type bi-cell, or a half-cell, but may encompass various other cells not mentioned above.

A mono-cell, which is an example of the unit cell, is configured to have a structure in which a positive electrode, a separator, a negative electrode, and a separator are sequentially stacked from top to bottom.

The positive electrode includes a positive electrode current collector and a positive electrode material applied to an upper surface and a lower surface of the positive electrode current collector. Here, the positive electrode current collector may include aluminum but is not necessarily limited thereto. In addition, the positive electrode material may be mixed with a positive electrode active material, a conductive agent, and a binder, and a filler is further added as needed.

The negative electrode includes a negative electrode current collector and a negative electrode material applied to an upper surface and a lower surface of the negative electrode current collector. Here, the negative electrode current collector may include copper but is not necessarily limited thereto. In addition, the negative electrode material may be mixed with a negative electrode active material, a conductive agent, and a binder, and the negative electrode current collector may be coated with the mixture.

The separator is located between the negative electrode and the positive electrode to prevent short circuit and to allow only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

An A-type bi-cell, which is another example of the unit cell, is configured to have a structure in which a positive electrode, a separator, a negative electrode, a separator, a positive electrode, and a separator are sequentially stacked from top to bottom.

A C-type bi-cell, which is another example of the unit cell, is configured to have a structure in which a negative electrode, a separator, a positive electrode, a separator, a negative electrode, and a separator are sequentially stacked from top to bottom.

A half-cell, which is another example of the unit cell, is configured to have a structure in which a negative electrode is interposed between a pair of separators, i.e., a separator, a negative electrode, and a separator are sequentially stacked from top to bottom.

The negative electrode, the separator, and the positive electrode constituting the A-type bi-cell, the C-type bi-cell, or the half-cell are identical to the negative electrode, the separator, and the positive electrode described above, and therefore redundant descriptions thereof will be omitted.

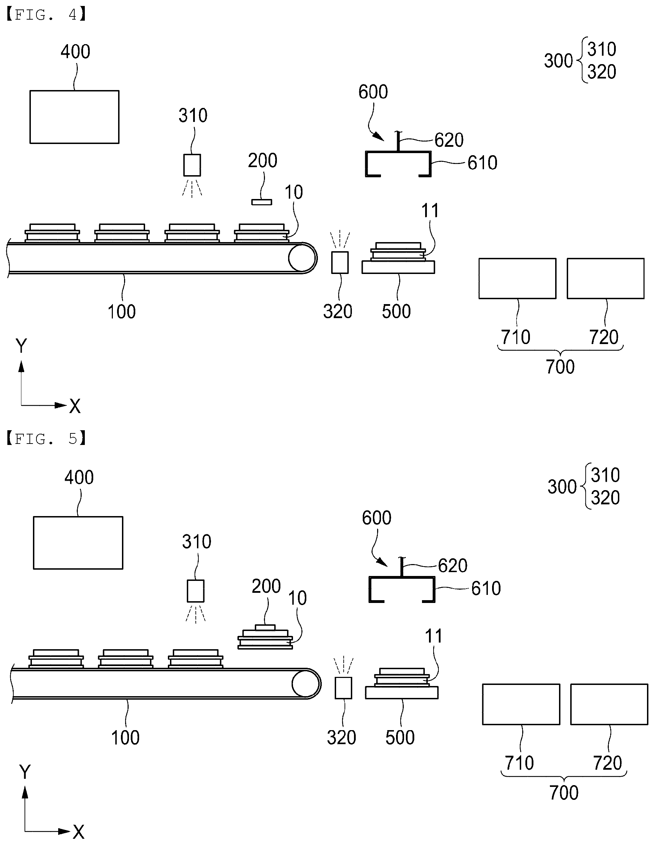

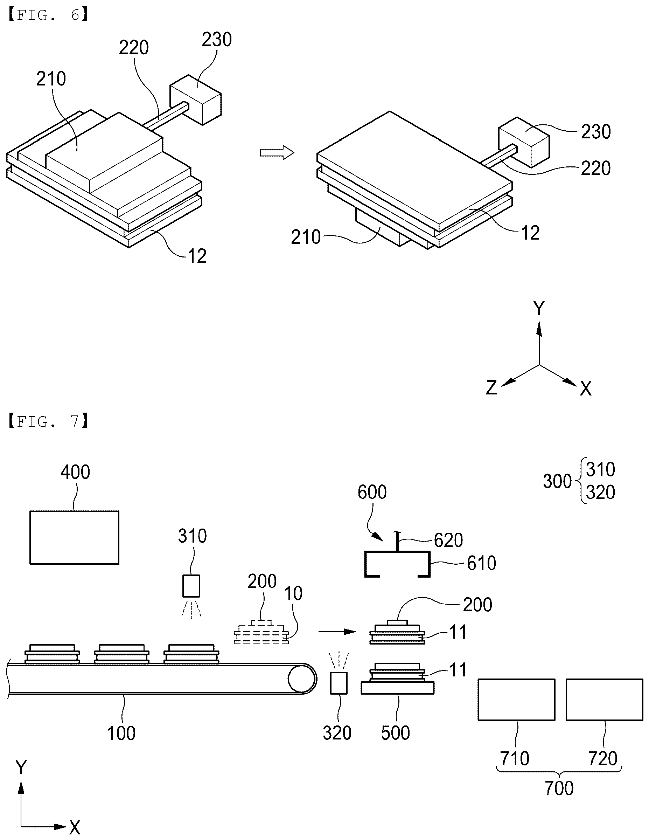

FIG. 4 is a conceptual view illustrating a unit cell stacking apparatus according to an embodiment of the present invention, FIG. 5 is a view illustrating that a transfer unit of the unit cell stacking apparatus according to the embodiment of the present invention suctions a unit cell, and FIG. 6 is a view illustrating the transfer unit of the unit cell stacking apparatus according to the embodiment of the present invention.

Referring to FIGs. 4 to 6, the unit cell stacking apparatus according to the embodiment of the present invention may include a conveyor belt 100, a transfer unit 200, an image capturing unit 300, a controller 400, a stacking unit 500, an ejection unit 600, and a storage unit 700.

First, the conveyor belt 100 is configured to allow a unit cell 10 to be seated thereon, and may transfer the unit cell 10 seated thereon to one side (3 o'clock position in FIG. 4) or the other side (9 o'clock position in FIG. 4).

At this time, the unit cell 10 may be seated in a horizontal direction. Here, the horizontal direction refers to a horizontal direction (x-axis direction) orthogonal to a stacking direction (y-axis direction) of the unit cell 10.

The conveyor belt 100 may transfer the unit cell 10 by a predetermined distance and maintain a temporarily stopped state. Here, the predetermined distance may correspond to the distance between unit cells 10 seated on the conveyor belt 100.

In addition, the stopped state of the conveyor belt 100 may be maintained during the time for which the transfer unit 200 transfers a unit cell 10 and returns to a predetermined position. For example, the predetermined position of the transfer unit 200 may be an upper side of a unit cell 10 located at the outermost side when the conveyor belt 100 is moved to one side.

The transfer unit 200 is configured to transfer a unit cell 10 seated on the conveyor belt 100 while suctioning an upper surface of the unit cell, and may include a suction unit 210, a support shaft 220, and a rotary driving member 230.

Here, the suction unit 210 may be configured to suction the upper surface of the unit cell 10. For example, the suction unit 210 may be connected to an external vacuum pump (not shown) via a tube or hose (not shown) through which air flows to suction the upper surface of the unit cell 10, but is not necessarily limited thereto.

The support shaft 220 may be connected to one side of the suction unit 210 to support the suction unit 210. The support shaft 220 may be connected to the suction unit 210 in a z-axis direction. Here, the z-axis direction in which the support shaft 220 is connected refers to a direction orthogonal to the stacking direction (y-axis direction) and a transfer direction (x-axis direction) of the unit cell 10.

The rotary driving member 230 connected to one side of the support shaft 220 may be configured to rotate the support shaft 22 in an axial direction. The rotary driving member 230 may rotate the support shaft 22 in the axial direction to implement roll motion of the suction unit 210. The rotary driving member 230 may include a motor, and the support shaft 220 may be fastened to a rotary shaft of the motor.

In the state in which the suction unit 210 suctions the upper surface of the unit cell 10, the rotary driving member 230 may rotate the suction unit 180° about the support shaft 220 (roll motion) to turn the unit cell 10 and the suction unit 210 upside down. That is, in the state in which the suction unit 210 is located above the unit cell 10 and the unit cell 10 is located under the suction unit 210, the suction unit 210 may be rotated 180° by roll motion of the rotary driving member 230 such that the suction unit 210 is located under the unit cell 10 and the unit cell 10 is located above the suction unit 210.

Although not shown in the figures, the transfer unit 200 may further include a driving member (not shown) configured to upwardly move the unit cell 10 a certain height in the y-axis direction in the state in which the suction unit 210 suctions the upper surface of the unit cell 10 and to transfer the unit cell 10 to one side or the other side.

For example, the driving member may move the suction unit 210 such that the unit cell 10 is located above the stacking unit 500 in the state in which the suction unit 210 suctions the upper surface of the unit cell 10.

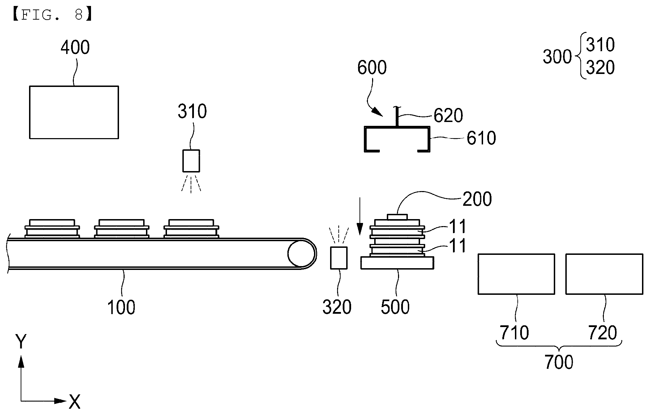

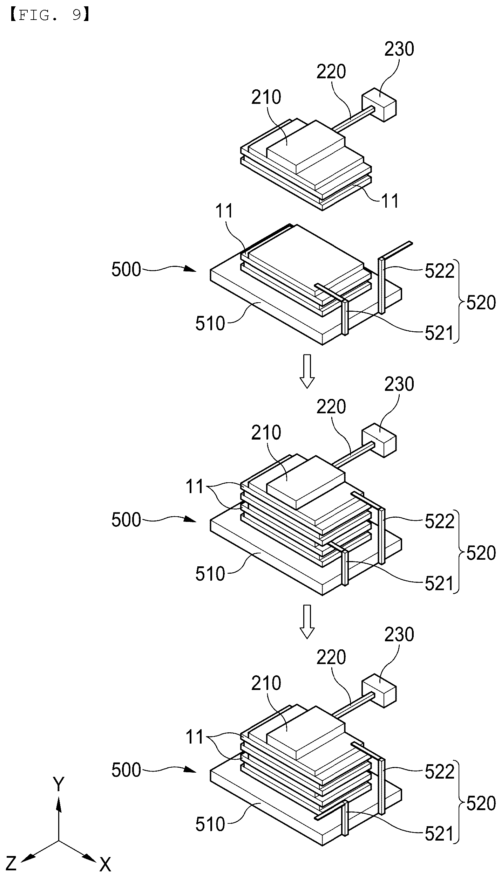

FIG. 7 is a view illustrating that the transfer unit of the unit cell stacking apparatus according to the embodiment of the present invention moves over the stacking unit while suctioning a normal unit cell, FIG. 8 is a view illustrating that the transfer unit of the unit cell stacking apparatus according to the embodiment of the present invention stacks the normal unit cell on the stacking unit, and FIG. 9 is a view illustrating the stacking unit of the unit cell stacking apparatus according to the embodiment of the present invention.

Referring to FIGs. 4 to 9, the image capturing unit 300 may include a first image capturing unit 310 and a second image capturing unit 320 configured to capture images of the unit cell 10. The first image capturing unit 310 may be configured to capture an image of an upper part of the unit cell 10 seated on the conveyor belt 100.

More specifically, the first image capturing unit 310 may be disposed spaced apart upward from the conveyor belt 100 on which the unit cell 10 is seated to capture an image of the upper part of the unit cell 10. The first image capturing unit 310 may be disposed in the vertical direction (y-axis direction) so as to be orthogonal to the horizontal direction (x-axis direction) of the unit cell 10.

At this time, the first image capturing unit 310 may provide information about the upper surface of the unit cell 10 (e.g., whether scratches are present on the upper surface of the unit cell 10 or whether foreign matter is attached thereto) and the position of the unit cell 10 seated on the conveyor belt 100 to the controller 400.

Here, information about the position of the unit cell 10 seated on the conveyor belt 100 indicates whether the unit cell 10 is seated at a predetermined position. More specifically, the information indicates whether the unit cell 10 is properly aligned relative to an X-Y plane on the conveyor belt 100.

The second image capturing unit 320 may be configured to capture an image of a lower part of the unit cell 10 transferred by the transfer unit 200.

More specifically, when the unit cell 10 is transferred in a state of being suctioned by the suction unit 210 of the transfer unit 200, the second image capturing unit 320 may be located under a transfer path to capture an image of the lower part of the unit cell 10. The second image capturing unit 320 may be disposed between the conveyor belt 100 and the stacking unit 500.

At this time, the second image capturing unit 320 may provide information about a lower surface of the unit cell 10 (e.g., whether scratches are present on the lower surface of the unit cell 10 or whether foreign matter is attached thereto) to the controller 400.

The controller 400 may determine whether the unit cell 10 is defective based on the information received from the image capturing unit 300. The information that the controller 400 receives from the image capturing unit 300 may be information about the upper part and the lower part of the unit cell 10 image-captured by the first image capturing unit 310 and the second image capturing unit 320, respectively, and information about the position of the unit cell 10 seated on the conveyor belt 100.

The controller 400 may determine whether the unit cell is a normal unit cell 11 or a defective unit cell 12 based on the information received from the image capturing unit 300.

For example, the controller 400 may determine whether the unit cell 10 is defective using a deep learning function. For example, the controller 400 may be trained through deep learning to indentify a normal state in which no scratches are present on the upper surface or the lower surface of the unit cell 10, no foreign matter attached thereto, and the unit cell 10 is seated on the conveyor belt 100 at a predetermined position.

Upon receiving images matching the learned image from the first image capturing unit 310 and the second image capturing unit 320, the controller 400 may determine that the unit cell is a normal unit cell 11, and upon receiving images exhibiting singularities from the first image capturing unit 310 and the second image capturing unit 320, the controller may determine that the unit cell is a defective unit cell 12.

The defective unit cell 12 may be a unit cell 10 having a defective upper surface and/or a defective lower surface based on the information received from the first image capturing unit 310 and/or the second image capturing unit 320 or a seated position deviating from the predetermined position.

In addition, after determining that the unit cell 10 is a defective unit cell 12 using the deep learning function, the controller 400 may determine that the unit cell is a first defective unit cell if the reason for the defect determination is a defect on the upper surface and/or the lower surface of the unit cell 10, and may determine that the unit cell is a second defective unit cell if the reason for the defect determination is a defect in the seated position of the unit cell 10.

The controller 40 performs overall control such that the functions of components are normally performed. The controller 400 may be implemented in the form of hardware, may be implemented in the form of software, or may be in the form of a combination of hardware and software. The controller 400 may be implemented in any of various forms that are obvious to those skilled in the art.

Upon determining that the unit cell 10 suctioned by the transfer unit 200 is a normal unit cell 11, the controller 400 may control the transfer unit 200 to seat the normal unit cell 11 on the stacking unit 500.

The stacking unit 500 may include a stacking stage 510 and a holding unit 520 to stack the normal unit cell 11.

The stacking stage 510 may be formed in a flat plate shape with a flat upper surface configured to allow the normal unit cell 11 to be stacked thereon. As an example, the stacking stage 510 may be made of a metal material or a plastic material, and the material of the stacking stage is not limited thereto as long as the normal unit cell 11 can be stacked and supported.

The normal unit cell 11 may be seated on the stacking stage 510 within a predetermined number or height. For example, a plurality of mono-cells may be stacked on the stacking stage 510, and a half-cell may be stacked at the uppermost end; however, the present invention is not limited thereto.

The holding unit 520 may be provided on one side of the stacking stage 510 to press the upper part of the normal unit cell 11 stacked on the stacking stage 510. At this time, the holding unit 520 may press the edge of the upper part of the normal unit cell 11 stacked at the uppermost end to temporarily fix the same.

In addition, the holding unit 520 may include a first holding member 521 and a second holding member 522 provided on one side of the stacking stage 510 in a longitudinal direction.

The first holding member 521 and the second holding member 522 may be driven independently of each other. For example, when one of the first holding member 521 and the second holding member 522 presses the upper part of the stacked normal unit cell 11, the other holding member may be spaced apart from the upper part of the stacked normal unit cell 11.

More specifically, when the first holding member 521 presses the upper part of the stacked normal unit cell 11, the second holding member 522 may be spaced apart from the upper part of the stacked normal unit cell 11 so as not to press the upper part of the stacked normal unit cell 11. Subsequently, when the normal unit cell 11 is transferred from the transfer unit 200 and is seated on the first holding member 521, the second holding member 522 may press the upper part of the newly seated normal unit cell 11, and the first holding member 521 may be spaced apart from the upper part of the stacked normal unit cells 11 so as not to press the upper part of the stacked normal unit cell 11.

As such, the first holding member 521 and the second holding member 522 may be configured to alternately press the upper part of the normal unit cell 11 stacked on the stacking stage 510.

Although only one first holding member 521 and one second holding member 522 are shown in the figures, each of the holding members may be provided in two so as to face each other or to be located in a diagonal direction.

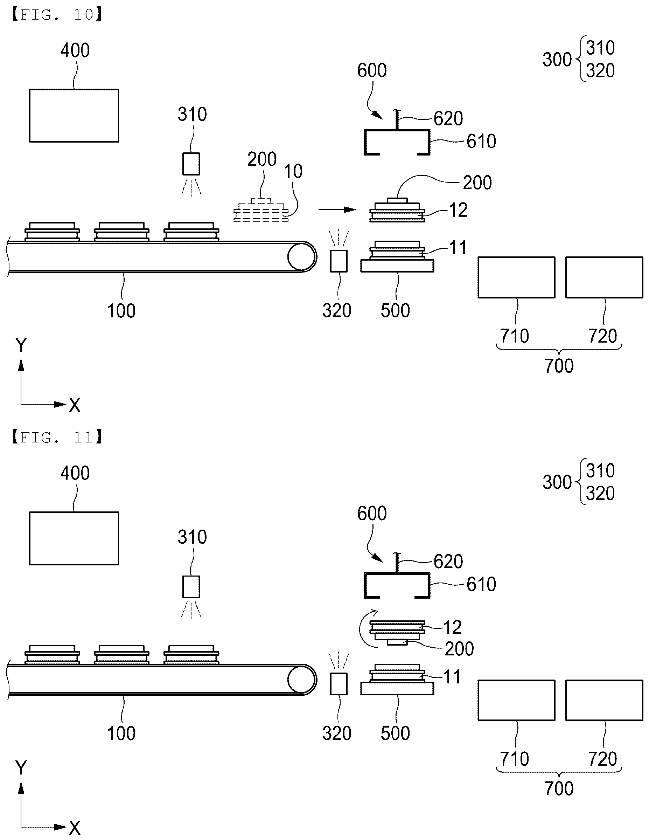

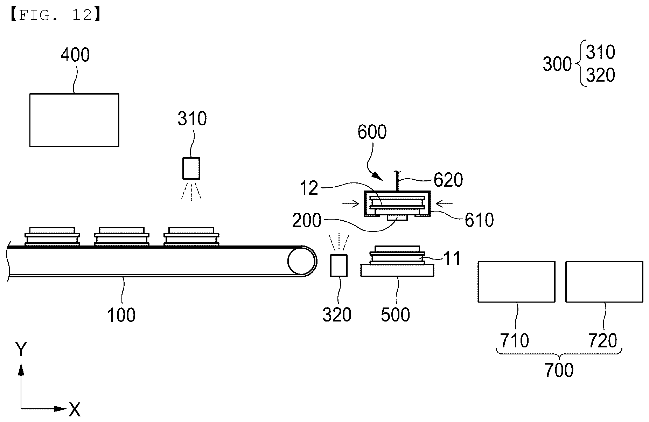

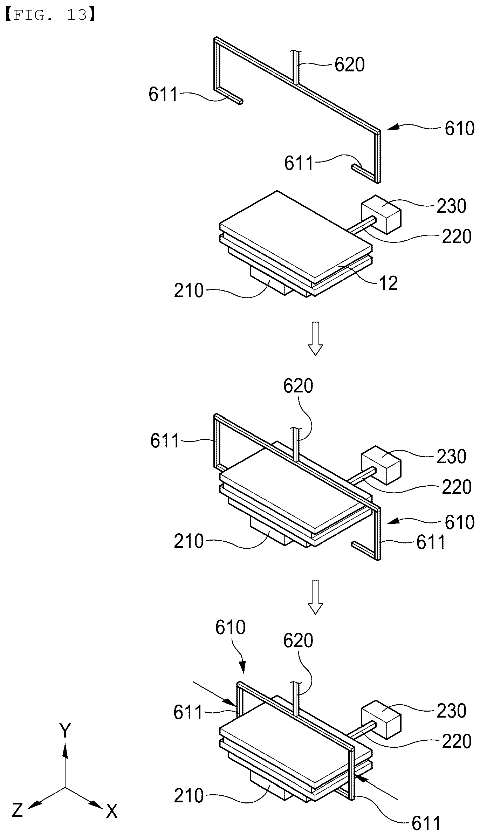

FIG. 10 is a view illustrating that the transfer unit of the unit cell stacking apparatus according to the embodiment of the present invention moves over the stacking unit while suctioning a defective unit cell, FIG. 11 is a view illustrating that the transfer unit of the unit cell stacking apparatus according to the embodiment of the present invention is rotated while suctioning the defective unit cell, FIG. 12 is a view illustrating that the ejection unit of the unit cell stacking apparatus according to the embodiment of the present invention grips the defective unit cell, and FIG. 13 is a view illustrating the ejection unit of the unit cell stacking apparatus according to the embodiment of the present invention.

Referring to FIGs. 10 to 13, upon determining that the unit cell 10 suctioned by the transfer unit 200 is a defective unit cell 12, the controller 400 may perform control such that the suction unit 210 that has suctioned the defective unit cell 12 is rotated 180° about the support shaft 220 by the rotary driving member 230.

As described above, as rotated by the rotary driving member 230, the suction unit 210 may be located under the unit cell 10, the unit cell 10 may be located above the suction unit 210, and the ejection unit 600 may be located above the unit cell 10.

The ejection unit 600 may be disposed spaced apart upward from the stacking unit 500, and the transfer unit 200 with the unit cell 10 suctioned thereby may be transferred between the ejection unit 600 and the stacking unit 500. At this time, it is desirable for the ejection unit 600 to be located spaced apart from the stacking unit 500 by a distance equal to or greater than the distance required for the transfer unit 200 with the unit cell 10 suctioned thereby to rotate about the support shaft 220 (roll driving).

The ejection unit 600 may include a gripper unit 610 and a driving member 620 configured to eject the defective unit cell 12 determined to be defective by the controller 400.

The gripper unit 610 may be configured to grip the defective unit cell 12 suctioned by the suction unit 210. For example, when the suction unit 210 is rotated 180° with the defective unit cell 12 sectioned thereby, the gripper unit 610 may be driven to grip the defective unit cell 12 located above.

For example, the gripper unit 610 may include a plurality of gripper members 611, wherein, when spaced apart from the defective unit cell 12, the plurality of gripper members 611 may be spaced apart from each other, and when approaching the defective unit cell 12, the plurality of gripper members 611 may approach each other to grip the defective unit cell 12.

In addition, as another example, the gripper unit 610 may be a suction member (not shown) configured to suction a lower surface of the defective unit cell 12 (12 o'clock position in FIG. 13) suctioned by the suction unit 210, which is opposite an upper surface of the defective unit cell 12 (6 o'clock position in FIG. 13), such that the defective unit cell 12 can be gripped (suctioned). Various gripping members capable of griping the defective unit cell 12 may be used as the gripper unit 610.

The driving member 620 may be connected to one side of the gripper unit 610 to transfer the gripper unit 610 toward the storage unit 700. The driving member 620 may transfer the gripper unit 610 downward or upward in the y-axis direction and may transfer the gripper unit to one side or the other side in the x-axis direction.

For example, the driving member 620 may move the gripper unit 610 such that the defective unit cell 12 is transferred to the storage unit 700 in the state in which the defective unit cell 12 is gripped by the gripper unit 610.

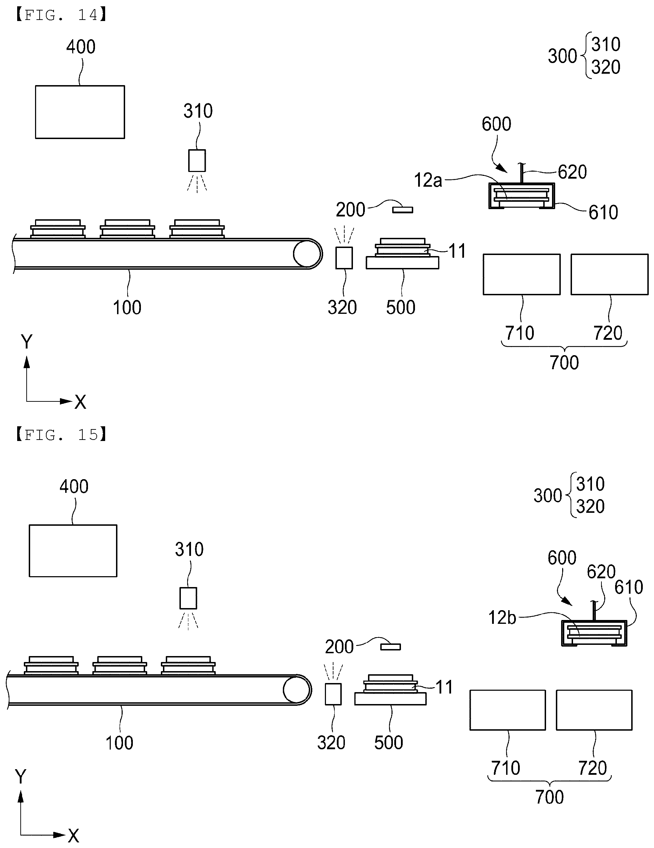

FIG. 14 is a view illustrating that the ejection unit of the unit cell stacking apparatus according to the embodiment of the present invention ejects a first defective unit cell, and FIG. 15 is a view illustrating that the ejection unit of the unit cell stacking apparatus according to the embodiment of the present invention ejects a second defective unit cell.

Referring to FIGs. 4 to 15, the storage unit 700 is configured to store the defective unit cell 12 ejected by the ejection unit 600, and may include a first storage unit 710 and a second storage unit 720.

Upon determining that the unit cell 10 suctioned by the transfer unit 200 is a first defective unit cell 12a, the controller 400 may rotate the transfer unit 200 to deliver the first defective unit cell 12a to the ejection unit 600, and may transfer the first defective unit cell 12a to the first storage unit 710 through the ejection unit 600.

The first storage unit 710 may be configured to store a first defective unit cell 12a having a defective upper surface and/or a defective lower surface based on the information received from the first image capturing unit 310 and/or the second image capturing unit 320. That is, the first storage unit 710 is a storage unit configured to store a first defective unit cell 12a determined to be defective due to scratches present on the upper surface and/or the lower surface thereof or foreign matter attached thereto.

In addition, upon determining that the unit cell 10 suctioned by the transfer unit 200 is a second defective unit cell 12b, the controller 400 may rotate the transfer unit 200 to deliver the second defective unit cell 12b to the ejection unit 600, and may transfer the second defective unit cell 12b to the second storage unit 720 through the ejection unit 600.

The second storage unit 720 may be configured to store a second defective unit cell 12b having a seated position deviating from the predetermined position based on the information received from the first image capturing unit 310. That is, the second storage unit 720 is a storage unit configured to store a second defective unit cell 12b determined to be defective as the position of the unit cell 10 seated on the conveyor belt 100 deviates from the predetermined position.

In other words, the second defective unit cell 12b stored in the second storage unit 720 is determined to be defective due simply to the seated position thereof, unlike the first defective unit cell 12a having scratches present on the upper surface and/or the lower surface thereof or foreign matter attached thereto. Consequently, it is possible to collect and reuse the second defective unit cell 12b received in the second storage unit 720.

Accordingly, the second defective unit cell 12b, which is simply defective in position, may be converted into a good unit cell, whereby it is possible to improve the unit cell production yield.

Next, a unit cell stacking method using the unit cell stacking apparatus having the aforementioned configurations will be described.

Referring to FIGs. 4 to 15, the unit cell stacking method according to the present invention includes (S1) a step of suctioning an upper surface of a unit cell 10 seated on the conveyor belt 100 through the transfer unit 200, (S2) a step of transferring the transfer unit 200 with the unit cell 10 suctioned thereby, and (S3) a step of seating the unit cell 10 on the stacking unit 500 or delivering the unit cell 10 to the ejection unit 600.

The unit cell stacking method may further include a step of capturing an image of an upper part of the unit cell 10 through the first image capturing unit 310 in step (S1) and a step of capturing an image of a lower part of the unit cell 10 through the second image capturing unit 320 in step (S2).

In addition, prior to step (S3), the controller 400 may receive information about the upper part of the unit cell 10 image-captured in step (S1) and information about the lower part of the unit cell 10 image-captured in step (S2), and may determine whether the unit cell 10 is defective.

Here, the controller 400 may determine whether the unit cell 10 is defective based on information about the upper surface of the unit cell 10 (e.g., whether scratches are present on the upper surface of the unit cell 10 or whether foreign matter is attached thereto), information about the lower surface of the unit cell 10 (e.g., whether scratches are present on the lower surface of the unit cell 10 or whether foreign matter is attached thereto), and the position of the unit cell 10 seated on the conveyor belt 100.

For example, if the controller 400 determines that the unit cell 10 is a normal unit cell 11, the transfer unit 200 may seat the normal unit cell 11 on the stacking unit 500 in step (S3).

As another example, if the controller 400 determines that the unit cell 10 is a defective unit cell 12, the transfer unit 200 may deliver the defective unit cell 12 to the ejection unit 600 in step (S3). Here, the transfer unit 200 may be rotated by the rotary driving member 230, whereby the defective unit cell 12 suctioned by the suction unit 210 may be located above the suction unit 210.

After step (S3), the ejection unit 600 may eject the defective unit cell 12 to the storage unit 700. At this time, if the controller 400 determines that the defective unit cell 12 is a first defective unit cell 12a, the ejection unit 610 may store the first defective unit cell 12a in the first storage unit 710, and if the controller 400 determines that the defective unit cell 12 is a second defective unit cell 12b, the ejection unit 610 may store the second defective unit cell 12b in the second storage unit 720.

Of course, after step (S3), even while the defective unit cell 12 is ejected by the ejection unit 600, the transfer unit 200 may repeatedly perform steps (S1) to (S3), thereby improving the equipment operating rate.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Unit cell
11: Normal unit cell
12: Defective unit cell
12a: First defective unit cell 12b: Second defective unit cell
100: Conveyor belt
200: Transfer unit
210: Suction unit
220: Support shaft
230: Rotary driving member
300: Image capturing unit
310: First image capturing unit
320: Second image capturing unit
400: Controller
500: Stacking unit
510: Stacking stage
520: Holding unit
521: First holding member 522: Second holding member
600: Ejection unit
610: Gripper unit 611: Gripper member
620: Driving member
700: Storage unit
710: First storage unit
720: Second storage unit

## Claims

1. A unit cell stacking apparatus comprising:
a conveyor belt configured to allow a unit cell to be seated thereon and to transfer the unit cell to one side or the other side;
a transfer unit configured to transfer the unit cell while suctioning an upper surface of the unit cell;
an image capturing unit configured to capture an image of the unit cell;
a controller configured to determine whether the unit cell is defective based on information received from the image capturing unit;
a stacking unit configured to allow a normal unit cell determined to be normal by the controller to be stacked thereon; and
an ejection unit configured to eject a defective unit cell determined to be defective by the controller.

2. The unit cell stacking apparatus according to claim 1, wherein the transfer unit comprises:
a suction unit configured to suction the upper surface of the unit cell;
a support shaft connected to one side of the suction unit, the support shaft being configured to support the suction unit; and
a rotary driving member connected to one side of the support shaft, the rotary driving member being configured to rotate the support shaft in an axial direction.

3. The unit cell stacking apparatus according to claim 2, wherein, when the defective unit cell is suctioned by the suction unit, the transfer unit is rotated 180° about the support shaft by the rotary driving member.

4. The unit cell stacking apparatus according to claim 3, further comprising:
a storage unit configured to store the ejected defective unit cell, wherein
the ejection unit comprises:
a gripper unit configured to grip the defective unit cell suctioned by the suction unit; and
a driving member configured to transfer the gripper unit toward the storage unit.

5. The unit cell stacking apparatus according to claim 2, wherein, when the normal unit cell is suctioned by the suction unit, the transfer unit seats the normal unit cell on the stacking unit.

6. The unit cell stacking apparatus according to claim 2, wherein the image capturing unit comprises:
a first image capturing unit configured to capture an image of an upper part of the unit cell seated on the conveyor belt; and
a second image capturing unit configured to capture an image of a lower part of the unit cell transferred by the transfer unit.

7. The unit cell stacking apparatus according to claim 6, wherein the defective unit cell is a unit cell having a defective upper surface and/or a defective lower surface based on information received from the first image capturing unit and/or the second image capturing unit or a seated position deviating from a predetermined position.

8. The unit cell stacking apparatus according to claim 7, further comprising:
a storage unit configured to store the ejected defective unit cell, wherein
the storage unit comprises:
a first storage unit configured to store a first defective unit cell having a defective upper surface and/or a defective lower surface; and
a second storage unit configured to store a second defective unit cell having a seated position deviating from the predetermined position.

9. The unit cell stacking apparatus according to claim 2, wherein the stacking unit comprises:
a stacking stage configured to allow the normal unit cell to be stacked thereon; and
a holding unit provided on one side of the stacking stage, the holding unit being configured to press an upper part of the normal unit cell stacked on the stacking stage.

10. The unit cell stacking apparatus according to claim 2, wherein the unit cell is at least one of a mono-cell, an A-type bi-cell, a C-type bi-cell, and a half-cell.

11. A unit cell stacking method using the unit cell stacking apparatus according to any one of claims 1 to 10, the unit cell stacking method comprising:
(S1) suctioning an upper surface of a unit cell seated on the conveyor belt through the transfer unit;
(S2) transferring the transfer unit with the unit cell suctioned thereby; and
(S3) seating the unit cell on the stacking unit or delivering the unit cell to the ejection unit.

12. The unit cell stacking method according to claim 11, further comprising:
capturing an image of an upper part of the unit cell in step (S1);
capturing an image of a lower part of the unit cell in step (S2); and
receiving information about the unit cell image-captured in step (S1) and step (S2) and determining whether the unit cell is defective through the controller prior to step (S3).

13. The unit cell stacking method according to claim 12, wherein, if the controller determines that the unit cell is a normal unit cell prior to step (S3), the transfer unit seats the normal unit cell on the stacking unit in step (S3).

14. The unit cell stacking method according to claim 13, wherein, if the controller determines that the unit cell is a defective unit cell prior to step (S3), the transfer unit delivers the defective unit cell to the ejection unit in step (S3).
